# EUROPEAN PATENT APPLICATION

(11) **EP 4 195 204 A1**
(43) Date of publication of application: **14.06.2023**
(21) Application number: 22157080.7
(22) Date of filing: 16.02.2022
(51) Int. Cl.: G11B 5/73, G11B 5/78

(54) **ULTRA-THIN MAGNETIC DATA CARRIER ON CERAMIC SUBSTRATE**

(30) Priority: 09.12.2021 AT 509862021
(71) Applicant: Ceramic Data Solutions GmbH, 4810 Gmunden (AT)
(72) Inventor: KUNZE, Martin, Gmunden (AT); PFLAUM, Christian, Bernried (DE)
(74) Representative: Vossius & Partner Patentanwälte Rechtsanwälte mbB

(57) **Abstract**

The present invention relates to an ultra-thin magnetic data carrier for long-term data conservation.

## Description

The present invention relates to an ultra-thin magnetic data carrier and to a method of manufacturing such an ultra-thin magnetic data carrier on a ceramic substrate

It is estimated that, on average, humans generate about 2.5 quintillion bytes per day. While a large portion of said data may be generated for short-term use only, the demand for long-term data storage is increasing on a day by day basis. Apparently, state of the art data carriers such as flash, hard disc drives (HDD) and magnetic tape are far from ideal in terms of long-term storage. Thus, companies like Microsoft are currently exploring alternative techniques for alternative storage technologies (see, for example, the so-called "Project Silica" and US 10,719,239 B2).

Accordingly, it is an object of the present invention to provide data carriers suitable for long-term use and storage.

This object is achieved with a data carrier according to claim 1 and a method of manufacturing a data carrier according to either of claims 10 and 13. Accordingly, the present invention, according to a first aspect, relates to a data carrier comprising a ceramic (glass ceramic or glass) substrate having first and second opposite surfaces and a thickness of at most 200 µm, preferably of at most 150 µm, wherein the first surface of the substrate is coated with a magnetic layer having a thickness of at most 100 nm. The magnetic layer comprises one or a combination of barium ferrite, strontium ferrite, cobalt, cobalt alloys and cobalt ferrite.

In other words, the present invention is based on the idea to utilize conventional and well-known magnetic materials which have already been employed in magnetic tapes. These materials are typically quite stable and thus suitable for long-term use and storage. However, up to now said magnetic layers have been coated on a substrate or film consisting of materials which become brittle over time and which are inflammable. Therefore, magnetic tapes used in the prior art are far from ideal in terms of a long-term storage. The present invention overcomes this disadvantage by utilizing a ceramic (glass ceramic or glass) substrate which is extremely durable, not inflammable and provides superior resistance to moisture, electromagnetic fields and acidic or corrosive substances. The inventive data carriers utilizing these materials may thus, for example, be heated to any temperature below the Curie temperature of the magnetic layer without corrupting the structure of the data carrier or the data stored in the magnetic layer. Since cobalt has a Curie temperature of 1,115 °C said material and alloys based thereon are particularly advantageous when it comes to maintaining the encoded information at high temperatures. Similarly, AlNiCo has a Curie temperature of 810 °C.

Information may be encoded within the magnetic layer of the data carrier of the present invention by commonly known techniques utilized previously for magnetic tapes.

Particularly preferred materials for the magnetic layer are AlNiCo, BaFe₁₂O₁₉, SrFe₁₂O₁₉ and CoFe₂O₄.

The magnetic layer preferably has a thickness of at most 80 nm, more preferably of at most 60 nm and most preferably of at most 50 nm.

In view of ease of the coating process and, in particular, the encoding/decoding process it is preferred that the average roughness Ra of both the substrate surface and the magnetic layer surface is smaller than 100 nm, preferably smaller than 75 nm, more preferably smaller than 50 nm, most preferably smaller than 30 nm. It is particularly preferred that the magnetic layer has a surface roughness Ra of at most 5 nm, preferably of at most 3 nm and most preferably of at most 2 nm. Ra is the arithmetic average value of a filtered roughness profile determined from deviations about the center line along the evaluation length.

Since the magnetic layer coating on the ceramic substrate may create strain in the data carrier, it may be beneficial to coat both surfaces of the ceramic substrate in order to achieve a symmetric strain. It is therefore preferred that the second surface of the substrate is coated with a second coating, the material of the second coating being different from the material of the ceramic substrate (and preferably identical to the material of the first coating). Of course, if a second coating is provided, said second coating may also be used to encode additional information, thus doubling the amount of data to be stored on the data carrier.

The ceramic substrate preferably comprises one or a combination of the following materials: silicon oxide, aluminum oxide, boron oxide, sodium oxide, potassium oxide, lithium oxide, zinc oxide, magnesium oxide.

Preferably, the barium ferrite, strontium ferrite, cobalt, cobalt alloy and/or cobalt ferrite particles in the magnetic layer have a particle volume of at most 4,000 nm³, more preferably at most 3,000 nm³ and most preferably at most 2,000 nm³.

The magnetic layer need not necessarily be directly coated onto the first surface of the ceramic substrate. Rather, the data carrier may further comprise an intermediate layer between the ceramic substrate and the magnetic layer, wherein the material of the intermediate layer differs from the material of the ceramic substrate. The intermediate layer may improve the bond between the magnetic layer and the ceramic substrate. In addition, or alternatively, the intermediate layer may be beneficial during the manufacturing process which may require calendaring in order to achieve a smooth surface as further discussed below. The intermediate layer preferably comprises a glass. More preferably, the intermediate layer comprises one or a combination of the following materials: silicone oxide, aluminum oxide, boron oxide, sodium oxide, potassium oxide, lithium oxide, zinc oxide, magnesium oxide.

In order to ensure a strong bond between the ceramic substrate and the magnetic layer (or between either or both of the ceramic substrate and the magnetic layer on the one hand and the intermediate layer on the other hand), the data carrier may be tempered during and/or after the coating process. Such tempering may achieve a sintered interface between the substrate and the magnetic layer (or between either or both of the ceramic substrate and the magnetic layer on the one hand and the intermediate layer on the other hand), which sintered interface enhances the bond between substrate and coating(s). Preferably, the sintered interface comprises at least one element from the substrate and at least one element from the respective coating.

The data carriers of the present invention may be provided in thin sheets, which may be stacked on top of each other. For example, each data carrier may be a circular, disc-like, rectangular, or quadratic sheet, for example a sheet of 10 cm x 10 cm. Such sheets may be easily handled during encoding and decoding and may be stacked on top of each other with, e.g., 50 or even 500 sheets forming one stack.

Alternatively, the data carrier may be an elongated film, which may be wound up in a roll. For this purpose, it is particularly advantageous if the substrate (and preferably the entire data carrier) has a Young's modulus of at most 100 GPa, preferably of at most 90 GPa, mire preferably of at most 80 GPa, most preferably of at most 75 GPa. It is further preferred that the data carrier does not break at a radius of curvature of 50 mm, preferably 30 mm and more preferably 20 mm, and more preferably 10 mm, and more preferably 5 mm. and more preferably 2.5 mm. In order to achieve these mechanical properties it is preferred to make the data carrier as thin as possible. Preferably, the thickness of the data carrier is at most 150 µm, more preferably at most 100 µm, even more preferably at most 50 µm, even more preferably at most 20 µm, even more preferably at most 10 µm, most preferably at most 5 µm.

The present invention, according to a second aspect, further relates to a method of manufacturing a data carrier as described above. According to said method, a ceramic substrate having first and second opposite surfaces and a thickness of at most 150 µm is provided. Subsequently, the first surface of the substrate is coated with a magnetic layer having a thickness of at most 100 nm. The magnetic layer comprises one or a combination of barium ferrite, strontium ferrite, cobalt, cobalt alloys and cobalt ferrite. As will be apparent to the skilled person, all preferred features discussed above with respect to the data carrier may also be advantageously employed in the context of the invention according to the second aspect.

Preferably, coating is performed using one or combination of the following techniques: vapor deposition techniques such as physical vapor deposition, chemical vapor deposition and sputtering; dip-coating, spray-coating.

Preferably, the method further comprises calendaring the coated substrate at a temperature above 400 °C, more preferably between 400 °C and 1,400 °C. The step of calendaring may be beneficial in order to improve the smoothness of the surface of the data carrier which may come into contact with a writing and/or reading device during encoding or decoding of the data carrier. If the ceramic substrate of the data carrier is a glass substrate, it will typically have a softening point at a temperature of about 400 °C. Thus, if calendaring is performed at a temperature above 400 °C, preferably at a temperature between 400 °C and 700 °C, the substrate material will be softened and the magnetic layer which, after coating, may comprise an irregular surface, will be partially pressed into the substrate. At the same time, a smooth surface will be generated at the top of the magnetic layer, i.e. at the top of the data carrier. If the ceramic substrate of the data carrier is a "true" ceramic, the softening point will be at a much higher temperature. In this case, calendaring is preferably performed at a temperature between 1,100 °C and 1,400 °C.

The present invention, according to the third aspect, further relates to a method of manufacturing a data carrier as described above. According to the method, a ceramic substrate having first and second opposite surfaces and a thickness of at most 150 µm is provided. Subsequently, the first surface of the substrate is coated with an intermediate layer. The intermediate layer is then coated with a magnetic layer having a thickness of at most 100 nm. The magnetic layer comprises one or a combination of barium ferrite, strontium ferrite, cobalt, cobalt alloys and cobalt ferrite. As will be apparent to the skilled person, all preferred features discussed above with respect to the data carrier may also be advantageously employed in the context of the invention according to the third aspect.

As discussed above, the intermediate layer preferably comprises a glass. This is particularly advantageous if the substrate is a ceramic material which does not soften at the temperatures used for calendaring. Thus, the intermediate layer consisting of a glass may soften during calendaring so as to allow the magnetic layer to be partially pressed into said intermediate layer without affecting the ceramic substrate.

Accordingly, the method of the third aspect preferably further comprises a calendaring step at a temperature between 400 °C and 700 °C.

Coating the first surface of the substrate with an intermediate layer and/or coating the intermediate layer with a magnetic layer is preferably performed using one or a combination of the following techniques: vapor deposition techniques such as physical vapor deposition, chemical vapor deposition and sputtering; dip-coating, spray-coating.

As mentioned above, tempering may enhance the bond between substrate and coating. Thus, the method preferably comprises tempering the coated substrate at a temperature of at least 200°C, preferably at least 500°C and more preferably at least 1,000°C. Tempering may also take place during the calendaring step at elevated temperatures.

Preferred embodiments of the present invention are further elucidated below with reference to the Figures, which show:
- Fig. 1a: a perspective view of a preferred embodiment of a data carrier with one magnetic coating layer according to the present invention;
- Fig. 1b: a perspective view of another preferred embodiment of a data carrier with two magnetic coating layers according to the present invention;
- Fig. 2a: a perspective view of another preferred embodiment of a data carrier with one magnetic coating layer and an intermediate layer according to the present invention;
- Fig. 2b a: perspective view of another preferred embodiment of a data carrier with two magnetic coating layers and intermediate layers according to the present invention ;
- Fig. 3: a schematic drawing illustrating a coating process which may be employed during a method of manufacturing a data carrier according to the present invention; and
- Fig. 4: a schematic drawing illustrating a calendaring process which may be employed during a method of manufacturing a data carrier according to the present invention.

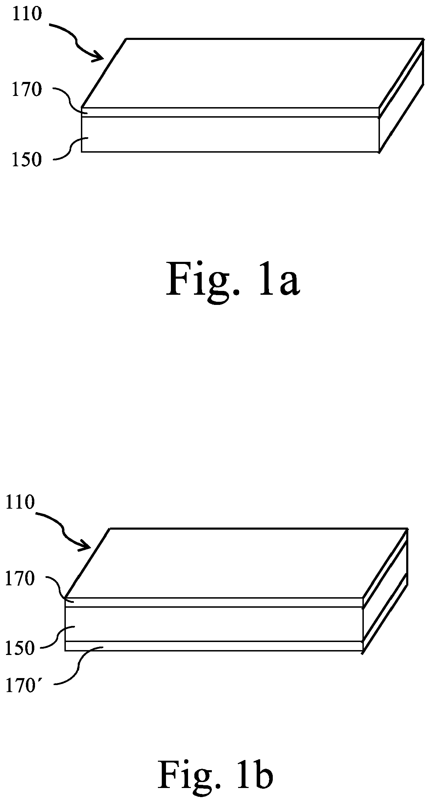

Fig. 1a a shows a perspective view of a preferred embodiment of a data carrier 110 according to the present invention. The data carrier 110 comprises a ceramic (glass ceramic or glass) substrate 150 having first and second opposite surfaces and a thickness of at most 200 µm. The first surface of the substrate 150 is coated with a magnetic layer 170 having a thickness of at most 100 nm.

Suitable materials for the substrate, inter alia, comprise so-called glass-ribbon (reference number 2010-03E) available from Nippon Electric Glass. Said glass-ribbon is available in thicknesses between 4 µm and 50 µm and lengths of up to 100 m. Similarly, Alumina Ribbon Ceramic or Ribbon ceramic made from zirconia (both with a thickness as low as 20 µm), available from Corning, may be employed. Other suitable and particularly preferred materials are: AGC Spool, AGC Dragontrail, Corning^{®} Willow^{®} Glass, Corning Standard Glass Carriers SGC 3.4, SGC 7.8 and SGC 9.0, Nippon Electric Glass - G-Leaf (Ultra-thin Glass), SCHOTT AS 87 eco, SCHOTT AF 32 Eco, and SCHOTT Xensation^{®} Flex.

The magnetic layer comprises one or a combination of BaFe₁₂O₁₉, SrFe₁₂O₁₉ and CoFe₂O₄. Information may be encoded within the magnetic layer 170 of the data carrier 110 by commonly known techniques utilized previously for magnetic tapes.

Since the magnetic layer coating 170 on the ceramic substrate 150 may create strain in the data carrier 110, it may be beneficial to coat both surfaces of the ceramic substrate 150 in order to achieve a symmetric strain. It is therefore preferred that the second surface of the substrate is coated with a second coating 170', the material of the second coating being different from the material of the ceramic substrate 150 (and preferably identical to the material of the first coating 170), as shown in Fig. 1b. Of course, if a second coating 170' is provided, said second coating 170' may also be used to encode additional information, thus doubling the amount of data to be stored on the data carrier 110.

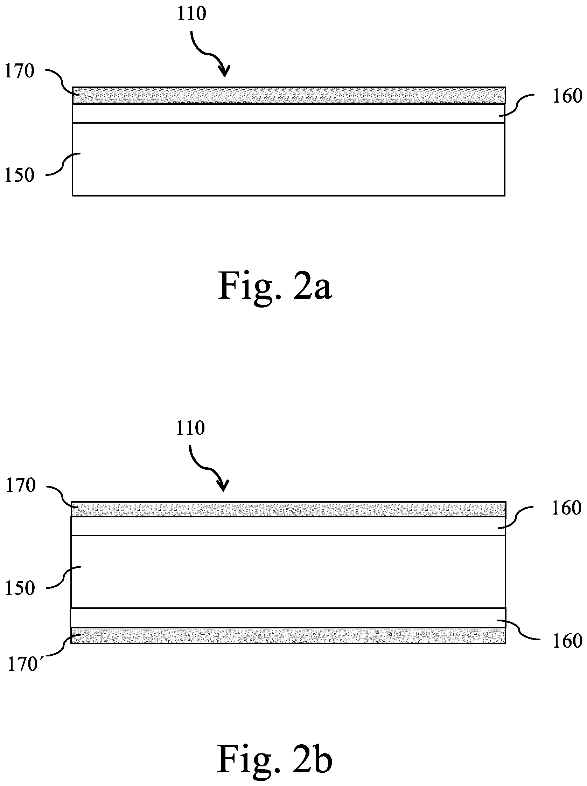

The magnetic layer 170 need not necessarily be directly coated onto the first surface of the ceramic substrate 150. Rather, the data carrier 110 may further comprise an intermediate layer 160 between the ceramic substrate 150 and the magnetic layer 170, as shown in Figs. 2a and 2b, wherein the material of the intermediate layer 160 differs from the material of the ceramic substrate 150. As outlined above, the intermediate layer 160 may improve the bond between the magnetic layer 170 and the ceramic substrate 150. In addition, or alternatively, the intermediate layer may be beneficial during the manufacturing process which may require calendaring in order to achieve a smooth surface as further discussed below.

The intermediate layer 160 preferably comprises a glass. More preferably, the intermediate layer 160 comprises one or a combination of the following materials: silicone oxide, aluminum oxide, boron oxide, sodium oxide, potassium oxide, lithium oxide, zinc oxide, magnesium oxide.

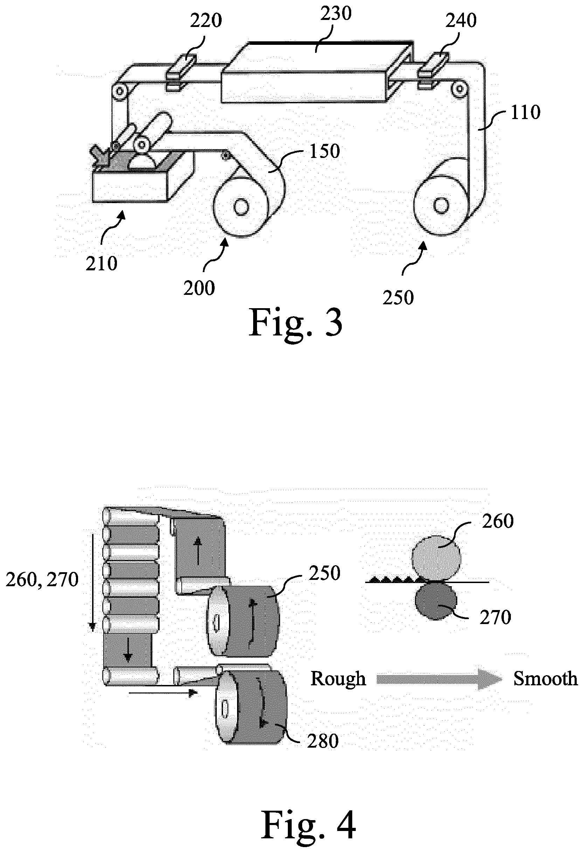

The present invention further relates to a method of manufacturing a data carrier as described above. According to said method, a ceramic substrate having first and second opposite surfaces and a thickness of at most 150 µm is provided. Subsequently, the first surface of the substrate is coated with a magnetic layer having a thickness of at most 100 nm. Different techniques may be employed for coating, one of which being exemplary shown in Fig. 3.

As shown in Fig. 3, the ceramic substrate 150 may be provided in the form of a roll 200 which may be unwound. The unwound ceramic substrate is then transported to a bath 210 containing the material of the magnetic layer 170 and coated by means of dip coating. The ceramic substrate 150 coated with the liquid magnetic material then passes through a means 220 for orienting the magnetic poles of the magnetic material within the coating. Subsequently, the coated substrated passes through a dryer 230. The thickness of the dry coated substrated may be measured in a means 240 for thickness measurement. Finally, the data carrier 110 is wound up in a roll 250.

As discussed above, the method may further comprise calendaring the coated substrate at a temperature between 400 °C and 1,400 °C. The step of calendaring may be beneficial in order to improve the smoothness of the surface of the data carrier 110 which may come into contact with a writing and/or reading device during encoding or decoding of the data carrier. If the ceramic substrate 150 of the data carrier 110 is a glass substrate, it will typically have a softening point at a temperature of about 400 °C. Thus, if calendaring is performed at a temperature between 400 °C and 700 °C, the substrate material will be softened and the magnetic layer which, after coating, may comprise an irregular surface, will be partially pressed into the substrate. At the same time, a smooth surface will be generated at the top of the magnetic layer, i.e. at the top of the data carrier.

An example for such a calendaring step is schematically shown in Fig. 4. The coated and dried substrate (e.g. the output of the process shown in Fig. 3) is unwound from the roll 250 or transported directly from the coating station to the calendaring station, where the coating of the coated substrate is smoothed between several hot steel roll pairs 260, 270 and finally wound up on a roll 280 before being cut to size in a further process step not displayed here.

## Claims

1. A data carrier comprising a ceramic substrate having first and second opposite surfaces and a thickness of at most 150 µm, wherein the first surface of the substrate is coated with a magnetic layer having a thickness of at most 100 nm, the magnetic layer comprising one or a combination of barium ferrite, strontium ferrite, cobalt, cobalt alloys and cobalt ferrite.

2. The data carrier of claim 1, wherein the magnetic layer has a thickness of at most 80 nm, preferably of at most 60 nm and most preferably of at most 50 nm.

3. The data carrier of claim 1 or 2, wherein the magnetic layer has a surface roughness of at most 5 nm, preferably of at most 3 nm and most preferably of at most 2 nm.

4. The data carrier of any of the preceding claims, wherein the ceramic substrate comprises one or a combination of the following materials: silicon oxide, aluminum oxide, boron oxide, sodium oxide, potassium oxide, lithium oxide, zinc oxide, magnesium oxide.

5. The data carrier of any of the preceding claims, wherein the barium ferrite, strontium ferrite, cobalt, cobalt alloys and/or cobalt ferrite particles in the magnetic layer have a particle volume of at most 4,000 nm³, preferably at most 3,000 nm³ and most preferably at most 2,000 nm³.

6. The data carrier of any of the preceding claims, further comprising an intermediate layer between the ceramic substrate and the magnetic layer, wherein the material of the intermediate layer differs from the material of the ceramic substrate.

7. The data carrier of claim 6, wherein the intermediate layer comprises a glass, preferably one or a combination of the following materials: silicon oxide, aluminum oxide, boron oxide, sodium oxide, potassium oxide, lithium oxide, zinc oxide, magnesium oxide.

8. The data carrier of any of the preceding claims, wherein the data carrier can be reversibly bent to a radius of curvature of 5 cm, preferably of 3 cm, more preferably of 2 cm.

9. The data carrier of any of the preceding claims, wherein the data carrier is wound up in a roll.

10. Method of manufacturing a data carrier of any of the preceding claims, wherein the method comprises:
providing a ceramic substrate having first and second opposite surfaces and a thickness of at most 150 µm; and
coating the first surface of the substrate with a magnetic layer having a thickness of at most 100 nm, the magnetic layer comprising one or a combination of barium ferrite, strontium ferrite, cobalt, cobalt alloys and cobalt ferrite.

11. The method of claim 10, wherein coating is performed using one or a combination of the following techniques: vapor deposition techniques such as physical vapor deposition, chemical vapor deposition and sputtering; dip-coating, spray-coating.

12. The method of claim 10 or 11, further comprising calendaring the coated substrate at a temperature above 400 °C, preferably between 400 °C and 1,400 °C.

13. Method of manufacturing a data carrier of any of claims 1 to 9, wherein the method comprises:
providing a ceramic substrate having first and second opposite surfaces and a thickness of at most 150 µm; and
coating the first surface of the substrate with an intermediate layer;
coating the intermediate layer with a magnetic layer having a thickness of at most 100 nm, the magnetic layer comprising one or a combination of barium ferrite, strontium ferrite, cobalt, cobalt alloys and cobalt ferrite.

14. The method of claim 13, wherein coating the first surface of the substrate with an intermediate layer and/or coating the intermediate layer with a magnetic layer is performed using one or a combination of the following techniques: vapor deposition techniques such as physical vapor deposition, chemical vapor deposition and sputtering; dip-coating, spray-coating.

15. The method of claim 13 or 14, further comprising calendaring the coated substrate at a temperature between 400 °C and 700 °C.
